(19) Europäisches Patentamt
European Patent Office
Office européen des brevets

(11) Veröffentlichungsnummer: **0 024 746**
**B1**

(12) # EUROPÄISCHE PATENTSCHRIFT

(45) Veröffentlichungstag der Patentschrift: **02.03.83**

(51) Int. Cl.³: **C 10 G 27/06**, C 10 K 1/14, B 01 D 53/14, C 07 C 143/78, C 07 F 9/38

(21) Anmeldenummer: **80105588.0**

(22) Anmeldetag: **13.07.79**

(60) Veröffentlichungsnummer der früheren Anmeldung nach Art. 76 EPÜ:

(54) **Verfahren zur Absorption und Entfernung von Wasserstoffsulfid in Form von elementarem Schwefel aus Gasen oder Gasgemischen und eine ein Anthrachinonsulfonsäureamid-Derivat enthaltende alkalische Lösung.**

(30) Priorität: **21.07.78 GB 3084478**

(43) Veröffentlichungstag der Anmeldung: **11.03.81 Patentblatt 81/10**

(45) Bekanntmachung des Hinweises auf die Patenterteilung: **02.03.83 Patentblatt 83/9**

(84) Benannte Vertragsstaaten: **BE DE FR GB IT NL**

(56) Entgegenhaltungen:
**FR-A-2 254 361**
**GB-A-871 233**
**GB-A-948 270**
**US-A-3 997 439**

(73) Patentinhaber: **CIBA-GEIGY AG, Patentabteilung Postfach, CH-4002 Basel (CH)**

(72) Erfinder: **Randell, Donald Richard, Dr., 75, Mauldeth Road Heaton Mersey, Stockport Cheshire (GB)**
Erfinder: **Phillips, Emyr, Dr., 12 Pinewood Court Broad Road, Sale Cheshire (GB)**

**EP 0 024 746 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Absorption und Entfernung von Wasserstoffsulfid in Form von elementaren Schwefel aus Gasen oder Gasgemischen und eine ein Anthrachinonsulfonsäureamid-Derivat enthaltende alkalische Lösung

Die Erfindung betrifft ein Verfahren, wo $H_2S$ als Verunreinigung aus Gasen und flüssigen Kohlenwasserstoffen entfernt wird.

Ähnliche Verfahren sind bereits in der GB-A-871 233 und in der GB-A-948 270 beschrieben worden. Diese bekannten Verfahren haben aber den Nachteil, daß die dabei verwendeten Anthrachinondisulfonsäuren Probleme bezüglich der Löslichkeit in den angewandten Waschlösungen aufwerfen. Dies hat eine Begrenzung der Aktivität bei der Entfernung von $H_2S$ zur Folge.

Die Verwendung von Anthrachinonsulfonsäureamid bzw. -carbonsäureamid als photographischer Desensibilisator ist aus GB-A-465 343 bekannt.

Gegenstand der Erfindung ist Verfahren zur Absorption und Entfernung von $H_2S$ in Form von elementarem Schwefel aus Gasen oder Gasgemischen durch Waschen des Gases oder der Gasmischung mit einer alkalischen Lösung, welche eine oder mehrere Anthrachinonverbindungen enthält, wobei $H_2S$ oxidiert und elementarer Schwefel freigemacht wird und die reduzierte Anthrachinonverbindung in Kontakt mit freiem Sauerstoff oder mit einem sauerstoffhaltigen Gas oxidiert wird, welches dadurch gekennzeichnet ist, daß die alkalische Lösung als Anthrachinonverbindung eine oder mehrere Verbindungen der Formel I

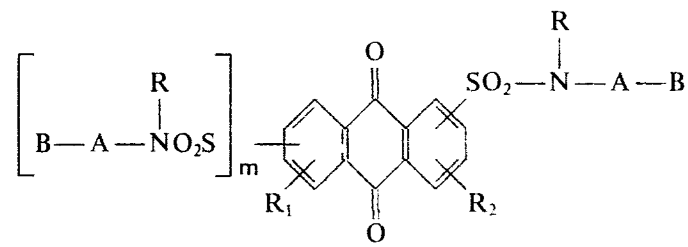

(I)

worin

| | |
|---|---|
| A | eine geradkettige oder verzweigte Alkylengruppe mit 1—4 C-Atomen ist, |
| B | $-SO_3M$, $-CO_2M$, $-PO_3HM$ oder $PO_3M_2$ bedeutet wobei |
| M | Wasserstoff oder ein wasserlöslich-machendes Kation ist, |
| R | Wasserstoff, ein wasserlöslich-machendes Kation oder eine geradkettige oder verzweigte Alkylgruppe mit 1—4 C-Atomen bedeutet, |
| $R_1$ und $R_2$ | gleich oder verschieden sind und für Wasserstoff, Methyl oder $-COOH$ stehen, wobei mindestens eines von $R_1$ und $R_2$ Wasserstoff ist, und |
| m | 0 oder 1 ist, enthält. |

Bevorzugt enthält die alkalische Lösung solche Verbindungen der Formel I, in der B die Gruppe $-SO_3M$, $R_1$ und $R_2$ Wasserstoff, M und R Wasserstoff, Alkalimetall oder ein Ammonium-Kation, in dem die H-Atome durch $C_1-C_6$-Alkyl oder $C_1-C_6$-Hydroxyalkyl substituiert sein können, darstellen, A ein geradkettiges $C_1-C_4$-Alkylen bedeutet und m 1 ist.

Sind M und R wasserlöslich-machende Kationen, so sind sie bevorzugt Alkalimetalle, wie z. B. Natrium oder Kalium, substituiertes oder unsubstituiertes Ammonium, wie z. B. Ammonium oder gegebenenfalls substituiertes Alkylammonium. Beispiele für Alkylsubstituenten für das Ammonium sind Methyl, Äthyl, Propyl, Butyl oder Hydroxyäthyl, welches Mono-, Di- oder Triäthanolamin ergibt.

In der weiteren Vorzugsform der Erfindung enthält die alkalische Lösung solche Verbindungen der Formel I, in der A Methylen oder Äthylen ist, m die Zahl 1 bedeutet und M und/oder R Natrium, Kalium oder Ammonium bedeuten.

Bevorzugt werden als Verbindungen der Formel I folgende Stoffe verwendet.

N,N'-Bis(sulphomethyl)anthrachinon-2,6-disulphonamid,
N,N'-Bis(sulphomethyl)anthrachinon-2,7-disulphonamid, Gemische dieser beiden Verbindungen,

N,N'-Bis(sulpho-2-äthyl)anthrachinon-2,6-disulphonamid,
N,N'-Bis(sulpho-2-äthyl)anthrachinon-2,7-disulfonamid und Gemische der letzteren beiden Stoffe.

Beispiele für die Verbindungen der Formel I

m = O, R = $R_1$ = H

N-Sulphomethylanthrachinon-2-sulphonamid
N-Sulpho-2-äthylanthrachinon-2-sulphonamid
N-Sulpho-3-propylanthrachinon-2-sulphonamid
N-Sulpho-4-butylanthrachinon-2-sulphonamid
N-Sulpho(1,1-dimethyläthyl)anthrachinon-2-sulphonamid

m = O, R = $C_1-C_4$ Alkyl, $R_1$ = H

N-Methyl-N-sulpho-methylanthrachinon-2-sulphonamid
N-Methyl-N-sulpho-2-äthylanthrachinon-2-sulphonamid
N-Methyl-N-sulpho-3-propylanthrachinon-2-sulphonamid
N-Methyl-N-sulpho-4-butylanthrachinon-2-sulphonamid

m = 1, R = $R_1$ = H

N,N'-Bis(sulphomethyl)anthrachinon-1,5-disulphonamid
N,N'-Bis(sulphomethyl)anthrachinon-1,6-disulphonamid
N,N'-Bis(sulphomethyl)anthrachinon-1,7-disulphonamid
N,N'-Bis(sulphomethyl)anthrachinon-2,6-disulphonamid
N,N'-Bis(sulphomethyl)anthrachinon-2,7-disulphonamid
N,N'-Bis(sulpho-2-äthyl)anthrachinon-1,5-disulphonamid
N,N'-Bis(sulpho-2-äthyl)anthrachinon-1,6-disulphonamid
N,N'-Bis(sulpho-2-äthyl)anthrachinon-1,7-disulphonamid

N,N'-Bis(sulpho-2-äthyl)anthrachinon-2,6-disulphonamid
N,N'-Bis(sulpho-2-äthyl)anthrachinon-2,7-disulphonamid
N,N'-Bis(sulpho-3-propyl)anthrachinon-1,5-disulphonamid
N,N'-Bis(sulpho-3-propyl)anthrachinon-1,6-disulphonamid
N,N'-Bis(sulpho-3-propyl)anthrachinon-1,7-disulphonamid

N,N'-Bis(sulpho-3-propyl)anthrachinon-2,6-disulphonamid
N,N'-Bis(sulpho-3-propyl)anthrachinon-2,7-disulphonamid
N,N'-Bis(sulpho-4-butyl)anthrachinon-1,5-disulphonamid
N,N'-Bis(sulpho-4-butyl)anthrachinon-1,6-disulphonamid
N,N'-Bis(sulpho-4-butyl)anthrachinon-1,7-disulphonamid

N,N'-Bis(sulpho-4-butyl)anthrachinon-2,6-disulphonamid
N,N'-Bis(sulpho-4-butyl)anthrachinon-2,7-disulphonamid
N,N'-Bis(sulpho-1,1-dimethyläthyl)anthrachinon-2,6-disulphonamid
N,N'-Bis(sulpho-1,1-dimethyläther)anthrachinon-2,7-disulphonamid

m = 1, R = $C_1-C_4$ Alkyl, $R_1$ = H

N,N'-Dimethyl-N,N'-bis(sulphomethyl)anthrachinon-1,5-disulphonamid
N,N'-Diäthyl-N,N'-bis(sulphomethyl)anthrachinon-1,6-disulphonamid
N,N'-Dipropyl-N,N'-bis(sulphomethyl)anthrachinon-1,7-disulphonamid

N,N'-Dimethyl-N,N'-bis(sulphomethyl)anthrachinon-2,6-disulphonamid
N,N'-Diäthyl-N,N'-bis(sulphomethyl)anthrachinon-2,7-disulphonamid

N,N'-Dimethyl-N,N'-bis(sulphomethyl)anthrachinon-1,5-disulphonamid
N,N'-Diäthyl-N,N'-bis(sulpho-2-äthyl)anthrachinon-1,6-disulphonamid
N,N'-Dipropyl-N,N'-bis(sulpho-2-äthyl)anthrachinon-1,7-disulphonamid

N,N'-Dimethyl-N,N'-bis(sulpho-2-äthyl)anthrachinon-2,6-disulphonamid
N,N'-Diäthyl-N,N'-bis(sulpho-2-äthyl)anthrachinon-2,7-disulphonamid

N,N'-Dimethyl-N,N'-bis(sulpho-3-propyl)anthrachinon-1,5-disulphonamid
N,N'-Diäthyl-N,N'-bis(sulpho-3-propyl)anthrachinon-1,6-disulphonamid
N,N'-Dipropyl-N,N'-bis(sulpho-3-propyl)anthrachinon-1,7-disulphonamid

N,N'-Dimethyl-N,N'-bis(sulpho-3-propyl)anthrachinon-2,6-disulphonamid
N,N'-Diäthyl-N,N'-bis(sulpho-3-propyl)anthrachinon-2,7-disulphonamid

N,N'-Dimethyl-N,N'-bis(sulpho-4-butyl)anthrachinon-1,5-disulphonamid
N,N'-Diäthyl-N,N'-bis(sulpho-4-butyl)anthrachinon-1,6-disulphonamid
N,N'-Dipropyl-N,N'-bis(sulpho-4-butyl)anthrachinon-1,7-disulphonamid

N,N'-Dimethyl-N,N'-bis(sulpho-4-butyl)anthrachinon-2,6-disulphonamid
N,N'-Diäthyl-N,N'-bis(sulpho-4-butyl)anthrachinon-2,7-disulphonamid,

sowie Verbindungen worin B $-COOH$ oder $-PO_3H_2$ ist anstelle von $-SO_3H$, oder Natrium-, Kalium- oder Ammoniumsalze der zuvor genannten Verbindungen oder Gemische der genannten Verbindungen.

Die Verbindungen der Formel I, worin R Wasserstoff ist oder geradkettiges oder verzweigtes $C_1-C_4$ Alkyl, können durch die Umsetzung der entsprechenden Anthrachinonsulfonylhalogenide der Formel II

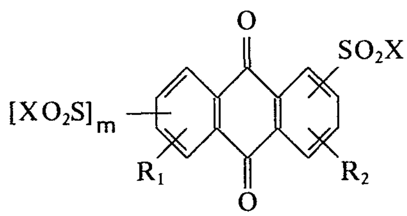

(II)

mit einer Verbindung der Formel III

$$R—NH—A—B \qquad (III)$$

worin X Halogen, insbesondere Chlor ist; und A, m, B, R, $R_1$ und $R_2$ die zuvor genannte Bedeutung haben, hergestellt werden.

Die Reaktion erfolgt vorteilhafterweise in einer Lösung, die aus wäßrigem Alkalisalz und aus einem wasserlöslichen Äther, wie z. B. Tetrahydrofuran besteht und die Verbindung der Formel II enthält. Die Lösung sollte eine Temperatur niedriger als 20°C haben. Die Reaktionszeit kann den Reaktionsbedingungen entsprechend variieren, beträgt jedoch vorteilhafterweise 1 bis 12 Stunden.

Die Verbindungen der Formel II können nach der Methode beschrieben von Kozlev et al., J. Gen. Chem. Russ 1947, 17, 289, hergestellt werden.

Die Verbindungen der Formel I, worin A $-CH_2-$ ist, können ferner aus den entsprechenden Anthrachinonsulfonamiden der Formel IV

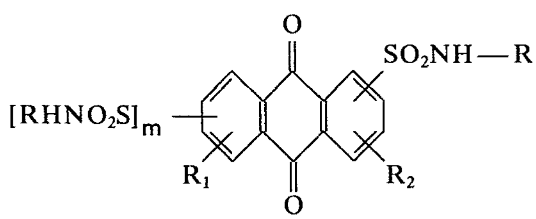

(IV)

und aus der Verbindung der Formel V

$$HO—CH_2—B \qquad (V)$$

worin m, B, R, $R_1$ und $R_2$ die zuvor genannte Bedeutung haben hergestellt werden.

Vorteilhafterweise gibt man die Verbindung der Formel IV in eine wäßrige Lösung der Verbindung der Formel V und erwärmt bis zu 100°C. Die Reaktionszeit kann je nach Reaktionsbedingungen variieren, beträgt jedoch üblicherweise 1 bis 12 Stunden. Die Reaktionstemperatur ist vorzugsweise 60–80°C.

Die Verbindungen der Formel V, worin B $-SO_3Na$ ist, können auf einfache Weise aus Formaldehyd und Natriumbisulfit in wäßriger Lösung bei 80°C hergestellt werden. In diesem Fall entsteht die Verbindung der Formel I durch das Umsetzen der entstandenen Lösung mit der Verbindung der Formel IV.

Die Verbindung der Formel IV kann nach der Methode beschrieben von Tr. Leningr. Khim-Framatsent. Inst., 1960, 11, 48 hergestellt werden.

Weiterer Gegenstand der Erfindung sind die alkalischen Lösungen, welche die Verbindungen der Formel I enthalten und für das erfindungsgemäße Verfahren verwendet werden.

Die Erfindung betrifft ferner eine alkalische Lösung und deren Verwendung, welche neben der Verbin-

dung der Formel I eine Verbindung mit einem mindestens zweiwertigen Metall, z. B. Vanadium enthält. Die Lösung kann gegebenenfalls Chelat- oder Komplexbildung zur Zurückhaltung des Metalls in der Lösung enthalten. Die Komplexbildner sind Verbindungen, die mindestens einen Phosphorsäurerest enthalten.

Die Vanadium-Verbindung ist vorzugsweise Alkalimetall- oder Ammoniumvanadat. Es kommen Ortho-, Meta-, oder Pyrovanadat in Frage. Beispiele für die Vanadium-Verbindung sind Natriumammonium-vanadat und Natriumorthovanadat.

Das Verhältnis der Verbindung der Formel I zu Vanadium beträgt vorteilhafterweise von 3 : 1 bis 1 : 2, bevorzugt von 2 : 1 bis 1 : 1, besonders bevorzugt 2 : 1,5, vorausgesetzt, daß das Verhältnis von Vanadium zu $H_2S$ 2 : 1 ist.

Es ist vorteilhaft die Verbindungen der Formel I zur $H_2S$-Entfernungeinzusetzen,da sie frei vonChlorid-Ionen sind und daher die Korrosion der Apparatur vermieden wird. Die Verbindungen der Formel I sollten daher aus den entsprechenden Anthrachinonsulfonamiden der Formel IV, wie beschrieben, anstelle von Anthrachinonsulfonylchloriden hergestellt werden.

Besonders vorteilhaft ist die Verwendung von Gemischen bestehend aus 2,6- und 2,7-Disulfonamiden der Formel I, da sie eine erhöhte Löslichkeit zeigen gegenüber den Gemischen der entsprechenden Disulfonsäuren. Die gute Löslichkeit erlaubt den Gesamteinsatz des Gemisches als Katalysator zur Entfernung von $H_2S$ aus Gasen, während die 2,7-Disulfonsäure zuerst von der schlechten löslichen 2,6-Disulfonsäure abgetrennt werden muß.

Die folgenden Beispiele erläutern die Erfindung. Teile sind Gewichtsteile, Prozente sind Gewichtsprozente.

## Beispiel 1

76,9 Teile Natrium-hydroxymethylsulfonat und 22,9 Teile Natriumhydroxid in 300 Teilen Wasser gibt man in einen Dreihalskolben, welcher mit Rührer, Thermometer und Rückflußkühler versehen ist. Diese Lösung wird auf 70°C erwärmt und mit 105 Teilen eines 1 : 1-Gemisches bestehend aus Anthrachinon-2,6- bzw. -2,7-disulphonamid versetzt und anschließend 3 Stunden auf 70°C gehalten. Nach Verdampfen des Lösungsmittels erhält man 171,4 Teile dunkelbraunes Natriumsalz von N,N'-bis-(sulfomethyl)anthrachinon-2,6- bzw. -2,7-disulfonamid mit einem Smp. > 300°C.

Analyse:

| | |
|---|---|
| C | 25,9% |
| H | 2,2% |
| N | 4,1% |
| S | 17,7% |
| Na | 13,2% |
| Cl | 0,1% |
| $SO_4^{-2}$ | 16,9% |
| Wasser-gehalt | 5,4% |

## Beispiel 2

In einen Vierhalskolben, versehen mit Rührer, Thermometer, Rückflußkühler und pH-Elektrode gibt man 4,4 Teile Aminomethansulfonsäure und 1,6 Teile Natriumhydroxid in 50 Teilen Wasser und 150 Teilen Tetrahydrofuran. Man fügt 8 Teile Anthrachinon-2,6-disulfonylchlorid portionsweise zu und reguliert die pH währenddem auf 11,5 mit 8N Natronlauge. Die Lösungstemperatur ist weniger als 20°C. Man verwendet Eis zum Kühlen. Nach Verdampfen des Lösungsmittels erhält man 14,2 Teile senffarbenes Natriumsalz von N,N'-bis(sulfonmethyl)anthrachinon-2,6-disulfonamid. Smp. > 300°C.

Analyse:

| | |
|---|---|
| C | 24,1% |
| H | 2,0% |
| N | 3,1% |
| S | 15,7% |
| Na | 15,8% |
| $Cl^-$ | 8,0% |
| $SO_4^{-2}$ | 12,7% |

Beispiel 3

10 Teile 2-Aminoäthylsulfonsäure und 3,2 Teile Natriumhydroxid in 100 Teilen Wasser und 160 Teilen Tetrahydrofuran werden in einem Vierhalskolben, wie in Beispiel 2 beschrieben, gegeben. Man fügt 16 Teile Anthrachinon-2,6-disulfonylchlorid portionsweise hinzu und mit Hilfe von 8N Natronlauge hält man die pH bei 12,5 und die Temperatur unter 20°C durch Kühlen mit Eis. Nach Verdampfen des Lösungsmittels erhält man 34,5 Teile braunes Natriumsalz von N,N'-bis-(sulfo-2-äthyl)anthrachinon-2,6-disulfonamid. Smp $>$ 300°C.

Analyse:

| | |
|---|---|
| C | 30,9% |
| H | 2,6% |
| N | 3,1% |
| S | 16,7% |
| Na | 7,4% |
| $Cl^-$ | 5,9% |
| $SO_4^{2-}$ | 7,2% |

Beispiel 4

Man gibt 4,4 Teile Aminomethansulfonsäure und 1,6 Teile Natriumhydroxid in 250 Teilen Wasser in einen Vierhalskolben wie in Beispiel 2 beschrieben. Man fügt portionsweise 8 Teile eines 1 : 1-Gemisches bestehend aus Anthrachinon-2,6- und -2,7-disulfonylchlorid zu. Die pH wird während 15 Stunden bzw. bis zum Beenden der Reaktion mit Hilfe von 8N Natronlauge bei 11,8 gehalten. Nach Verdampfen des Lösungsmittels erhält man braunes Natriumsalz von N,N'-bis(sulfomethyl)anthrachinon-2,6- und -2,7-disulfonamid. Smp. $>$ 300°C.

Analyse:

| | |
|---|---|
| C | 21,8% |
| H | 1,7% |
| N | 2,4% |
| S | 13,9% |
| Na | 19,8% |
| $Cl^-$ | 10,2% |
| $SO_4^{2-}$ | 21,2% |

Beispiel 5

6,2 Teile 2-Aminoäthylsulfonsäure und 2 Teile Natriumhydroxid in 50 Teilen Wasser und 34 Teilen Tetrahydrofuran werden in einen Vierhalskolben, wie in Beispiel 2 beschrieben, gegeben. Man fügt portionsweise 10 Teile eines 1 : 1-Gemisches bestehend aus Anthrachinon-2,6- und -2,7-disulfonylchlorid hinzu. Die pH wird mit 8N Natronlauge auf 13,1 gehalten und die Temperatur mit Hilfe von Eis unter 20°C. Nach Verdampfen des Lösungsmittels erhält man braun-schwarzes Natriumsalz von N,N'-bis(2-sulfonäthyl)anthrachinon-2,6- und -2,7-disulfonamid. Smp. $>$ 300°C.

Analyse:

| | |
|---|---|
| C | 23,3% |
| H | 2,6% |
| N | 3,1% |
| S | 14,4% |
| Na | 14,7% |
| $Cl^-$ | 7,9% |
| $SO_4^{2-}$ | 4,5% |

Beispiel 6

6 Teile Glyzin und 3,2 Teile Natriumhydroxid in 100 Teilen Wasser und 100 Teilen Tetrahydrofuran werden in einen Vierhalskolben, wie in Beispiel 2 beschrieben, gegeben. Man fügt portionenweise 16 Teile eines 1 : 1-Gemisches bestehend aus Anthrachinon-2,6- und -2,7-disulfonylchlorid hinzu. Die

pH wird mit 8N Natronlauge auf 12,3 gehalten und die Temperatur durch Kühlen mit Eis unter 20°C. Nach Verdampfen des Lösungsmittels erhält man 28,7 Teile schwarzes Natriumsalz von N,N'-bis(carboxymethyl)anthrachinon-2,6- und -2,7-disulfonamid. Smp: ~ 250°C.

### Beispiel 7

4 Teile Natrium-hydroxymethylsulfonat und 1,2 Teile Natriumhydroxid werden in 20 Teilen Wasser mit 5,6 Teilen Anthrachinon-2,7-disulfonamid, wie in Beispiel 1 beschrieben, versetzt. Nach Verdampfen des Lösungsmittels erhält man 6,5 Teile dunkelbraunes Natriumsalz von N,N'-bis(sulfomethyl)-anthrachinon-2,7-disulfonamid. Smp. > 260°C.

Analyse:

| | |
|---|---|
| C | 16,3% |
| H | 2,3% |
| S | 19,5% |
| Na | 14,4% |
| $Cl^-$ | < 0,1% |
| $SO_4^{2-}$ | 14,0% |

### Beispiel 8

3,7 Teile Natrium-hydroxymethylsulfonat und 1,1 Teile Natronlauge in 20 Teilen Wasser werden mit 5 Teilen Anthrachinon-1,5-disulfonamid, wie in Beispiel 1 beschrieben, versetzt. Nach Verdampfen des Lösungsmittels erhält man 6,5 Teile schwarzes Natriumsalz von N,N'-bis(sulfomethyl)anthrachinon-1,5-disulfonamid. Smp. > 300°C.

Analyse:

| | |
|---|---|
| C | 20,2% |
| H | 2,1% |
| N | 3,7% |
| S | 18,2% |
| Na | 15,5% |
| $Cl^-$ | 0,9% |
| $SO_4^{2-}$ | 16,9% |
| Wasser | 8,2% |

### Beispiel 9

6,1 Teile Natrium-hydroxymethylsulfonat und 1,8 Teile Natronlauge in 40 Teilen Wasser werden mit 8,4 Teilen eines Gemisches bestehend aus Anthrachinon-1,6- und -1,7-disulfonamid versetzt, wie in Beispiel 1 beschrieben. Nach Verdampfen des Lösungsmittels erhält man 15,1 Teile schwarzes Natriumsalz von N,N'-bis(sulfomethyl)anthrachinon-1,6- und -1,7-disulfonamid. Smp. > 300°C.

Analyse:

| | |
|---|---|
| C | 26,1% |
| H | 2,1% |
| N | 3,6% |
| S | 17,99% |
| Na | 13,3% |
| $Cl^-$ | 0,4% |
| $SO_4^{2-}$ | 15,9% |
| Wasser | 6,77% |

Wenn man in den Beispielen 1 und 7 bis 9 Kalium-hydroxymethylsulfonat, sowie in den Beispielen 2—6 Kaliumhydroxid verwendet, erhält man das entsprechende Kaliumsalz, Analogerweise kann Ammoniumhydroxymethylsulfonat bzw. Ammoniumhydroxid verwendet werden.

Beispiele 10—17

Anwendung von den Verbindungen der Formel I als Katalysator zum Entfernen von $H_2S$ aus Gasen. Die Testergebnisse zeigen die Überlegenheit der erfindungsgemäßen Verbindungen gegenüber 2,7-Anthrachinondisulfonsäure.

Zur Durchführung des Testes wird eine gasabsorbierende Lösung der folgenden Zusamensetzung hergestellt:

25 g/l $NaHCO_3$
5 g/l $Na_2CO_3$
10 g/l $Na_2S_2O_3$
8 g/l NaCNS
3,8 g/l $NaVO_3$
2 g/l Katalysator

Die pH beträgt 9,0—9,2. Die Zelle in der der Versuch durchgeführt wird, enthält ein 1 l Gefäß mit Sauerstoffelektrode, Kalomelektrode, Temperaturausgleichsonde, Luftzufuhr und eine lufthaltige Sinterscheibe.

Der gelöste Sauerstoffgehalt und das Redoxpotential wird gemessen.

1,5 l gasabsorbierende Lösung wird hergestellt und davon 1 l in die Zelle geführt. Die Lösung wird abwechselnd dreimal mit Sauerstoff behandelt und entlüftet indem zuerst Luft dann Sauerstoff mit 500 ml/Minute durchgeblasen wird. Die Lösung im entlüfteten Zustand.

In einem Minimum dieser Lösung wird 3,75 g $Na_2S$ aufgelöst und in die Zelle zurückgeführt. Wenn $H_2S$ in der alkalischen Absorptionslösung gelöst wird dissoziert zu $HS^-$. Einfachheitshalber schreibt man $HS^-$ beim Einsatz von $Na_2S$, da die dissozierte $S^{2-}$ Ionen aus $Na_2S$ bei der gegebenen pH zu $HS^-$ führen. Nach der Reduktion mit $Na_2S$ werden das Redoxpotential und der gelöste Sauerstoffgehalt für 10 Minuten stabilisiert während langsam einfließender Stickstoff für Bewegung sorgt. Die Lösung wird anschließend mit 500 ml/Min. durchfließender Luft reoxidiert. Der gelöste Sauerstoffgehalt und das Redoxpotential wird kontinuierlich abgelesen. Die Oxydation wird so lange fortgesetzt, bis das Redoxpotential und die gelöste Sauerstoffkonzentration unverändert bleiben. Die Lösung wird dann mit Stickstoff, der eine Durchflußgeschwindigkeit von 500 ml/Min. hat, entlüftet und mit einer Zugabe von 3,75 g $Na_2S$ reduziert. Das beschriebene Vorgehen wird dreimal ausgeführt und der ausgefällte Schwefel nach jedem Vorgang abfiltriert.

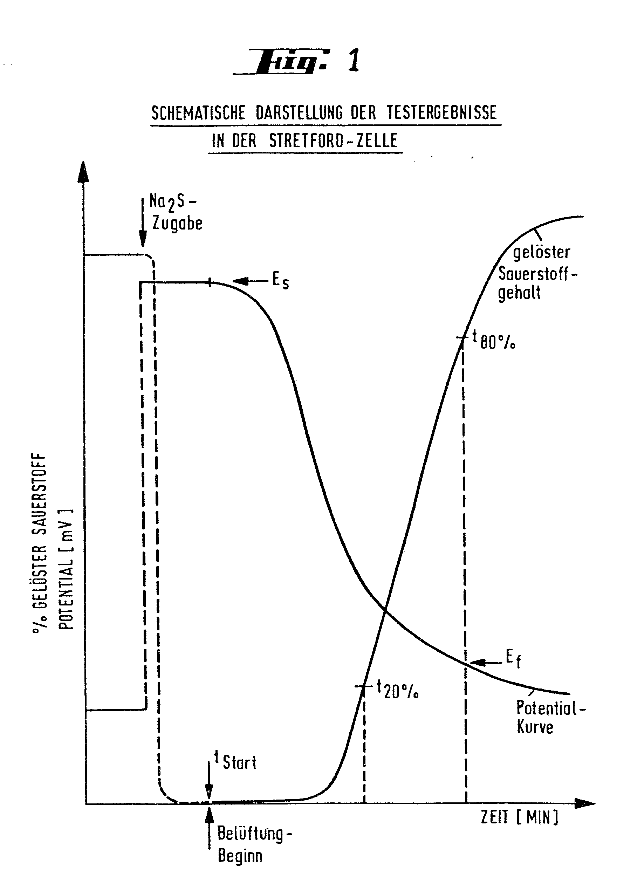

Die Ergebnisse sind schematisch in Figur 1 dargestellt. Es werden die folgenden Parameter verwendet:

i) $t_{20\%}$ = die Zeit in der die Lösung eine 20% Sättigung des gelösten Sauerstoffes erreicht.
ii) $t_{80\%}$ = die Zeit in der eine 80% Sauerstoffsättigung erreicht ist.
iii) das Verhältnis Es/Ef, worin Es das Redoxpotential des vollständig reduzierten Systems bedeutet und $E_f$ ein Redoxpotential im jeweiligen oxidierten Zustand ist. Einfachheitshalber wird $E_f$ als Redoxpotential bei $t_{80\%}$ genommen.

Die Ergebnisse die in Tafel 1 zusammengefaßt sind, sind die Durchschnittswerte aus 3 Messungen. Es wurde 2,7-Anthrachinondisulfonsäure mit den Natriumsalzen der folgenden Verbindungen oder deren Gemische verglichen:

A. N,N'-Bis(sulfomethyl)anthrachinon-2,6- und -2,7-disulfonamid.
B. N,N'-Bis(sulfomethyl)anthrachinon-2,6-disulfonamid.
C. N,N'-Bis(sulfo-2-äthyl)anthrachinon-2,6-disulfonamid.
D. N,N'-Bis(sulfo-2-äthyl)anthrachinon-2,6- und -2,7-disulfonamid.
E. N,N'-Bis(carboxymethyl)anthrachinon-2,6- und -2,7-disulfonamid.
F. N,N'-Bis(sulfomethyl)anthrachinon-2,7-disulfonamid.
G. N,N'-Bis(sulfomethyl)anthrachinon-1,5-disulfonamid.
H. N,N'-Bis(sulfomethyl)anthrachinon-1,6- und 1,7-disulfonamid.

Tafel 1

Vergleich der erfindungsgemäßen Produkte mit 2,7 ADA (Anthrachinondisulfonsäure)

| Beispiel | Katalysator | Zeit der Sauerstoffsättigung $t_{20\%}$ Min. | $t_{80\%}$ Min. | Potential Es mV | Ef mV | Verhältnis von Es/Ef |
|---|---|---|---|---|---|---|
| Vergleich | 2,7 ADA | 9 | 16 | −430 | −196 | 2.2 |
| 10 | A | 9 | 18 | −411 | −175 | 2.4 |
| 11 | B | 7 | 10 | −439 | −180 | 2.4 |
| 12 | C | 14 | 22 | −420 | −175 | 2.4 |
| 13 | D | 7 | 24 | −455 | −157 | 2.9 |
| 14 | E | 4 | 8 | −477 | −188 | 2.5 |
| 15 | F | 8 | 15 | −404 | −161 | 2.5 |
| 16 | G | 7 | 9 | −392 | −86 | 4.5 |
| 17 | H | 7 | 9 | −401 | −148 | 2.7 |

Manche Reaktionen zum Binden des gasförmigen Sauerstoffes sind ionisch und verlaufen relativ schnell. Im allgemeinen bleibt der Sauerstoffgehalt der Lösung 5%, so lange in der Lösung reduzierte ionische Verbindungen vorhanden sind. Darum kann man den Oxidationsgrad der Verbindungen durch Messen der Sauerstoffkonzentration bestimmen. Die Reoxidationszeit $t_{20\%}$ und $t_{80\%}$ gibt daher Aufschluß über die Reoxidationsrate des Systems in Gegenwart eines bestimmten Katalysators.

Der Prozeß, wie alle Oxidationsprozesse, benötigt ein Redoxpaar. Der Oxidationsgrad der Lösung bestimmt das Redoxpotential, das sofort abgelesen werden kann.

Die Flüssigkeit besteht aus einem Gemisch von mindestens 3 Redoxpaaren. Das Einzelelektrodenpotential ist logarithmisch zu den Konzentrationen der oxidierten und reduzierten Formen in der Lösung bezogen.

$$\text{Potential} = \frac{\text{Standard}}{\text{Potential}} + \text{Konstant} \times \log_{10} \frac{(\text{Konzent. der oxid. Form})}{(\text{Konzent. der reduz. Form})}$$

Das Verhältnis $E_s/E_f$ ist ein Maß für den Reoxidationsgrad. Die Katalysatorwirkung ist an Hand der beiden Messungen (Zeit bis zur Sauerstoffsättigung und Redoxpotential) bestimmbar.

Die Ergebnisse des Zellenversuches können in 3 Typen eingeteilt werden:

a) solche mit großem $t_{20\%}$, d. h. $\geq$ 30 Minuten aber auch großem Es/Ef-Verhältnis, d. h. $\geq$ 2,2.
b) solche mit mittlerem $t_{20\%}$, d. h. ~10 Minuten und großem Es/Ef-Verhältnis, d. h. $\geq$ 2,2.
c) solche mit kleinem $t_{20\%}$, d. h. 1−3 Minuten, aber mit kleinem Es/Ef-Verhältnis, d. h. $<$2,0.

Das bedeutet; a) ist ein langsamer aber wirksamer Katalysator, b) ist ein wirksamer Katalysator und c) ist unwirksam.

Wenn die Sauerstoffsättigung der Lösung 20% erreicht hat, hat der größte Teil der Redoxreaktion stattgefunden. Da ausreichend gelöster Sauerstoff zur Verfügung steht, so ist die Zeit vom $t_{20\%}$ zum $t_{80\%}$ hauptsächlich eine Funktion der Katalysatorwirksamkeit. Je kleiner daher das Intervall zwischen $t_{20\%}$ und $t_{80\%}$ ist, um so leichter wird der Katalysator zurück oxidiert und je mehr das Verhältnis Es/Ef über 2,2 liegt, um so wirksamer ist der Katalysator.

Aus den Resultaten ist ersichtlich, daß alle Verbindungen A−H in die Kategorie b) fallen und deren Wirksamkeit mindestens so gut wenn nicht besser als die von 2,7-Anthrachinondisulfonsäure, ist.

**Patentansprüche**

1. Verfahren zur Absorption und Entfernung von $H_2S$ in Form von elementarem Schwefel aus Gasen oder Gasgemischen durch Waschen des Gases oder der Gasmischung mit einer alkalischen Lösung, welche eine oder mehrere Anthrachinonverbindungen enthält, wobei $H_2S$ oxidiert und elementarer

Schwefel freigemacht wird und die reduzierte Anthrachinonverbindung in Kontakt mit freiem Sauerstoff oder mit einem sauerstoffhaltigen Gas oxidiert wird, dadurch gekennzeichnet, daß die alkalische Lösung als Anthrachinonverbindung eine oder mehrere Verbindungen der Formel

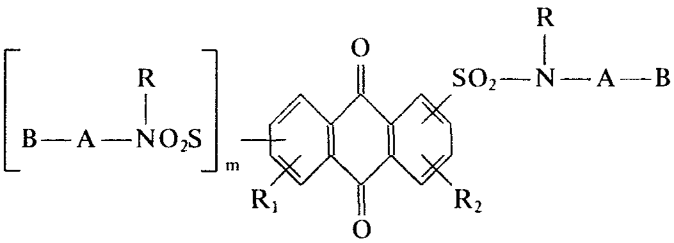

(I)

worin

A eine geradkettige oder verzweigte Alkylengruppe mit 1–4 C-Atomen ist,
B $-SO_3M$, $-CO_2M$, $-PO_3HM$ oder $-PO_3M_2$ bedeutet, wobei
M Wasserstoff oder ein wasserlöslich-machendes Kation ist,
R Wasserstoff, ein wasserlöslich-machendes Kation oder eine geradkettige oder verzweigte Alkylgruppe mit 1–4 C-Atomen bedeutet,
$R_1$ und $R_2$ gleich oder verschieden sind und für Wasserstoff, Methyl oder $-COOH$ stehen, wobei mindestens eines von $R_1$ und $R_2$ Wasserstoff ist, und
m 0 oder 1 ist, enthält.

2. Verfahren nach Anspruch 1, dadurch gekennzeichnet, daß die Verbindung der Formel I entspricht, in der B die Gruppe $-SO_3M$, $R_1$ und $R_2$ Wasserstoff, M und R Wasserstoff, Alkalimetall oder ein Ammonium-Kation, in dem die H-Atome durch $C_1-C_6$-Alkyl oder $C_1-C_6$-Hydroxyalkyl substituiert sein können, darstellen, A ein geradkettiges $C_1-C_4$-Alkylen bedeuten und m 1 ist.

3. Verfahren nach Anspruch 1, dadurch gekennzeichnet, daß die Verbindung der Formel I entspricht, in der A Methylen oder Aethylen ist, m die Zahl 1 bedeutet und M und/oder R Natrium, Kalium oder Ammonium bedeuten.

4. Verfahren nach Anspruch 1, dadurch gekennzeichnet, daß die Verbindung der Formel I N,N'-Bis(sulphomethyl)anthrachinon-2,6-disulphonamid ist.

5. Verfahren nach Anspruch 1, dadurch gekennzeichnet, daß die Verbindung der Formel I N,N'-Bis(sulphomethyl)anthrachinon-2,7-disulphonamid ist.

6. Verfahren nach Anspruch 1, dadurch gekennzeichnet, daß die Verbindung der Formel I ein Gemisch aus den Verbindungen gemäß Anspruch 4 und 5 ist.

7. Verfahren nach Anspruch 1, dadurch gekennzeichnet, daß die Verbindung der Formel I N,N'-Bis(sulpho-2-äthyl)anthrachinon-2,6-disulphonamid ist.

8. Verfahren nach Anspruch 1, dadurch gekennzeichnet, daß die Verbindung der Formel I N,N'-Bis(sulpho-2-äthyl)anthrachinon-2,7-disulfonamid ist.

9. Verfahren nach Anspruch 1, dadurch gekennzeichnet, daß die Verbindung der Formel I ein Gemisch aus den Verbindungen gemäß Anspruch 7 und 8 ist.

10. Verfahren gemäß Anspruch 1, dadurch gekennzeichnet, daß die alkalische Lösung neben der Verbindung der Formel I eine Verbindung mit einem mindestens zweiwertigen Metall und gegebenenfalls einem oder mehreren Chelat- oder Komplexbildner zur Zurückhaltung der metallhaltigen Verbindung in der Lösung enthält.

11. Verfahren nach Anspruch 1–10, dadurch gekennzeichnet, daß das Metall Vanadium ist.

12. Verfahren gemäß Anspruch 1–10, dadurch gekennzeichnet, daß das Verhältnis der Verbindung der Formel I zur Vanadiumverbindung von 3 : 1 bis 1 : 2 beträgt.

13. Alkalische Lösung enthaltend eine Verbindung der Formel I gemäß Anspruch 1.

14. Alkalische Lösung nach Anspruch 13, dadurch gekennzeichnet, daß sie zusätzlich eine Verbindung mit einem mindestens zweiwertigen Metall und einem Chelat- oder Komplexbildner zur Zurückhaltung der metallhaltigen Verbindung in der Lösung enthält.

15. Alkalische Lösung nach Anspruch 14, worin die zusätzliche Metallverbindung Alkalimetall- oder Ammoniumvanadat und zwar Ortho-, Meta- oder Pyrovanadat ist.

**Claims**

1. A process for the absorption and removal of $H_2S$, in the form of elementary sulfur, from gases and gas mixtures by washing of the gas or gas mixture with an alkaline solution containing one or more anthraquinone compounds, whereby $H_2S$ oxidises and elementary sulfur is liberated, and the reduced anthraquinone compound in contact with free oxygen or with an oxygen-containing gas is oxidised,

characterised in that the alkaline solution contains, as anthraquinone compound, one or more compounds of the formula I

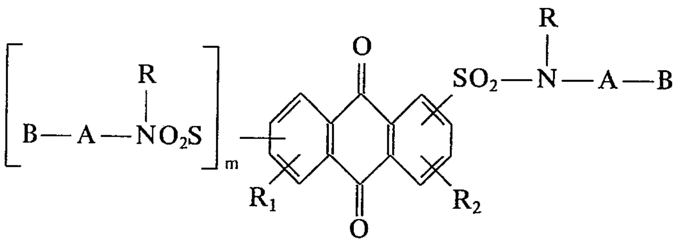

(I)

wherein

A is a straight-chain or branched-chain alkylene group having 1−4 C atoms,
B is $-SO_3M$, $-CO_2M$, $-PO_3HM$ or $-PO_3M_2$, where M is hydrogen or a warer-solubilising cation,
R is hydrogen, a water-solubilising cation or a straight-chain or branched-chain alkyl group having 1−4 C atoms,
$R_1$ and $R_2$ are identical or different, and are hydrogen, methyl or −COOH, with at least one $R_1$ and $R_2$ being hydrogen, and
m is 0 or 1.

2. A process according to Claim 1, wherein the compound corresponds to the formula I in which B is $-SO_3M$ group, $R_1$ and $R_2$ are hydrogen, M and R are hydrogen, an alkali metal or an ammonium cation in which the H atoms can be substituted by $C_1-C_6$-alkyl or $C_1-C_6$-hydroxyalkyl, A is a straight-chain $C_1C_4$-alkylene group, and m is 1.
3. A process according to Claim 1, wherein the compound corresponds to the formula I in which A is methylene or ethylene, m is the number 1, and M and/or R are (is) sodium, potassium or ammonium.
4. A process according to Claim 1, wherein the compound of the formula I is N,N'-bis(sulfomethyl)anthraquinone-2,6-disulfonamide.
5. A process according to Claim 1, wherein the compound of the formula I is N,N'-bis(sulfomethyl)anthraquinone-2,7-disulfonamide.
6. A process according to Claim 1, wherein the compound of the formula I is a mixture of the compounds according to Claims 4 and 5.
7. A process according to Claim 1, wherein the compound of the formula I is N,N'-bis(sulfo-2-ethyl)anthraquinone-2,6-disulfonamide.
8. A process according to Claim 1, wherein the compound of the formula I is N,N'-bis(sulfo-2-ethyl)anthraquinone-2,7-disulfonamide.
9. A process according to Claim 1, wherein the compound of the formula I is a mixture of the compounds according to Claims 7 and 8.
10. A process according to Claim 1, wherein the alkaline solution contains, besides the compound of the formula I, a compound with an at least bivalent metal and, if necessary, one or more chelating or complexing agents for retaining the metal-containing compound in solution.
11. A process according to Claims 1−10, wherein the metal is vanadium.
12. A process according to Claims 1−10, wherein the ratio of the compound of the formula I to the vanadium compound is 3:1 to 1:2.
13. An alkaline solution containing a compound of the formula I according to Claim 1.
14. An alkaline solution according to Claim 13, which additionally contains a compound with an at least bivalent metal and a chelating or complexing agent for retaining the metal-containing compound in solution.
15. An alkaline solution according to Claim 14, wherein the additional metal compound is alkali metal vanadate or ammonium vanadate, namely ortho-, meta- or pyrovanadate.

**Revendications**

1. Procédé pour absorber et éliminer $H_2S$ sous la forme de soufre élémentaire à partir de gaz ou de mélanges gazeux, par lavage du gaz ou de mélange gazeux avec une solution alcaline contenant un ou plusieurs composés anthraquinoniques, $H_2S$ étant oxydé et du soufre élémentaire étant libéré tandis que le composé anthraquinonique réduit est oxydé au contact d'oxygène libre ou d'un gaz contenant de l'oxygène, procédé caractérisé en ce que la solution alcaline contient, comme composé anthraquinonique, un ou plusieurs composés répondant à la formule générale I

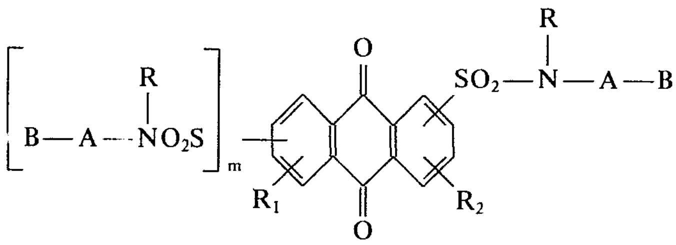

(I)

dans laquelle

A représente un radical alkylène, linéaire ou ramifié, contenant de 1 à 4 atomes de carbone,
B représente un groupe $-SO_3M$, $-CO_2M$, $-PO_3HM$ ou $-PO_3M_2$ où M représente l'hydrogène ou un cation hydrosolubilisant,
R représente l'hydrogène, un cation hydrosolubilisant ou un radical alkyle, linéaire ou ramifié, contenant de 1 à 4 atomes de carbone,
$R_1$ et $R_2$ représentent chacun, indépendamment l'un de l'autre, l'hydrogène, un radical méthyle ou un groupe $-COOH$, au moins l'un des deux représentant l'hydrogène, et
m égal à 0 ou à 1.

2. Procédé selon la revendication 1 caractérisé en ce que, dans la formule I du composé, B représente un groupe $-SO_3M$, $R_1$ et $R_2$ représentent chacun l'hydrogène, M et R représentent chacun l'hydrogène, un métal alcalin ou un cation d'ammonium dans lequel les atomes d'hydrogène peuvent être remplacés par des alkyles en $C_1-C_6$ ou des hydroxyalkyles en $C_1-C_6$, A représente un radical alkylène linéaire en $C_1-C_4$ et m est égal à 1.

3. Procédé selon la revendication 1, caractérisé en ce que, dans la formule I du composé, A représente un radical méthylène ou éthylène, m le nombre 1 et M et/ou R représentent le sodium, le potassium ou un ammonium.

4. Procédé selon la revendication 1, caractérisé en ce que le composé de formule I est le N,N'-bis-(sulfométhyl)-anthraquinone-disulfonamide-2,6.

5. Procédé selon la revendication 1, caractérisé en que le composé de formule I est le N,N'-bis-(sulfométhyl)-anthraquinone-disulfonamide-2,7.

6. Procédé selon la revendication 1, caractérisé en ce que le composé de formule I est un mélange des composés selon les revendications 4 et 5.

7. Procédé selon la revendication 1, caractérisé en ce que le composé de formule I est le N,N'-bis-(sulfo-2 éthyl)-anthraquinone-disulfonamide-2,6.

8. Procédé selon la revendication 1, caractérisé en ce que le composé de formule I est le N,N'-bis-(sulfo-2 éthyl)-anthraquinone-disulfonamide-2,7.

9. Procédé selon la revendication 1, caractérisé en ce que le composé de formule I est un mélange des composés selon les revendications 7 et 8.

10. Procédé selon la revendication 1, caractérisé en ce que la solution alcaline contient, en plus du composé de formule I, un composé comportant un métal au moins bivalent et, éventuellement, un ou plusieurs formateurs de chélates ou complexants dont le rôle est de retenir dans la solution le composé comportant un métal.

11. Procédé selon l'une quelconque des revendications 1 à 10, caractérisé en ce que le métal est le vanadium.

12. Procédé selon l'une quelconque des revendications 1 à 10, caractérisé en ce que le rapport du composé de formule I au composé du vanadium est compris entre 3:1 et 1:2.

13. Solution alcaline contenant un composé de formule I selon la revendication 1.

14. Solution alcaline selon la revendication 13, caractérisée en ce qu'elle contient en outre un composé comportant un métal au moins bivalent et un formateur de chélates ou de complexes dont le rôle est de retenir dans la solution le composé comportant un métal.

15. Solution alcaline selon la revendication 14, dans laquelle le composé métallique supplémentaire est un vanadate de métal alcalin ou d'ammonium, plus précisément un orthovanadate, un métavanadate ou un pyrovanadate.

Fig. 1

SCHEMATISCHE DARSTELLUNG DER TESTERGEBNISSE IN DER STRETFORD-ZELLE